## Europäisches Patentamt

## European Patent Office

## Office européen des brevets

(11) Veröffentlichungsnummer: **0 033 469**
**B1**

(12) **EUROPÄISCHE PATENTSCHRIFT**

(45) Veröffentlichungstag der Patentschrift:
**11.07.84**

(51) Int. Cl.³: **H 04 L 11/16**, G 06 F 3/04

(21) Anmeldenummer: **81100393.8**

(22) Anmeldetag: **20.01.81**

(54) **Verfahren und Schaltungsanordnung zum Übertragen von binären Signalen zwischen Anschlussgeräten.**

(30) Priorität: **30.01.80 DE 3003340**

(43) Veröffentlichungstag der Anmeldung:
**12.08.81 Patentblatt 81/32**

(45) Bekanntmachung des Hinweises auf die Patenterteilung:
**11.07.84 Patentblatt 84/28**

(84) Benannte Vertragsstaaten:
**AT BE CH FR GB IT LI NL SE**

(56) Entgegenhaltungen:
**EP - A - 0 010 264**
**DE - A - 2 831 887**
**DE - A - 2 844 058**
**US - A - 4 174 536**

(73) Patentinhaber: **SIEMENS AKTIENGESELLSCHAFT, Berlin und München Wittelsbacherplatz 2, D-8000 München 2 (DE)**

(72) Erfinder: **Kleinert, Helmuth, Ing. grad., Stockmannstrasse 44, D-8000 München 71 (DE)**

ACTORUM AG

# Beschreibung

Die Erfindung bezieht sich auf ein Verfahren und eine Schaltungsanordnung zum Übertragen von binären Signalen zwischen jeweils zumindest mit Signalgebern verbundenen Anschlussgeräten und jeweils zumindest mit Signalempfängern verbundenen Anschlussgeräten, wobei sämtliche Anschlussgeräte über ein zentrales Busleitungssystem miteinander und mit einer die Signalübertragung zwischen ihnen steuernden zentralen Steuereinrichtung verbunden sind, welche wenigstens einen zentralen Prozessor, insbesondere einen Mikroprozessor, mit zugehörigen Programm- und Arbeitsspeichern umfasst, und wobei mit Hilfe des zentralen Prozessors aufeinanderfolgend die einzelnen Anschlussgeräte bezeichnende Adressen erzeugbar sind.

Ein solches Verfahren bzw. eine solche Schaltungsanordnung in Form einer dezentralen Datenübertragungsanlage mit einer Vielzahl von an einem Übertragungsmedium angeschlossenen Teilnehmer-Übertragungsstationen und mit einer Leitstation ist bekannt (DE-A 1 - 2 844 058). Bei dieser bekannten Datenübertragungsanlage soll jede der vorgesehenen Stationen Informationssignale direkt an jeweils eine andere Teilnehmer-Übertragungsstation und an die Leitstation übermitteln können. Zu diesem Zweck werden in der bekannten Datenübertragungsanlage mehrere Schritte ausgeführt:

a) die Leitstation sendet aufeinanderfolgend die Adressen der Teilnehmer-Übertragungsstationen über das erwähnte Übertragungsmedim aus;

b) die jeweils übermittelte Adresse wird von sämtlichen Teilnehmer-Übertragungsstationen aufgenommen. Von diesen Übertragungsstationen erkennt allerdings nur die durch die jeweilige Adresse adressierte Teilnehmer-Übertragungsstation ihre eigene Adresse und beginnt daraufhin mit einer gegebenenfalls anstehenden Nachricht unter Voranstellung der Adresse der Bestimmungs-Teilnehmer-Übertragungsstation mit der Aussendung über das Übertragungsmedium. Wenn keine Nachricht zu übertragen ist, sendet die betreffende adressierte Teilnehmer-Übertragungsstation ein Leerlaufkennzeichen über das Übertragungsmedium aus;

c) die im Falle einer zu übertragenden Nachricht so adressierte Bestimmungs-Teilnehmer-Übertragungsstation nimmt die an sie gerichtete Nachricht auf;

d) nach Empfang des der übertragenen Nachricht nachgestellten Nachrichtenendezeichens EOM sendet die Leitstation eine weitere Adresse entsprechend dem obigen Merkmal a) aus, das heisst die Adresse einer weiteren Teilnehmer-Übertragungsstation. Eine solche Adressenerzeugung erfolgt auch dann, wenn die Leitstation ein Leerlaufkennzeichen aufnimmt.

Bei der vorstehend betrachteten bekannten Datenübertragungsanlage werden also durch die dort vorgesehene Leitstation die einzelnen Teilnehmer-Übertragungsstationen in einem Scanning-Verfahren adressiert, um daraufhin auszusendende Nachrichten zusammen mit der den gewünschten Empfänger bezeichnenden Adresse auszusenden. Es hat sich jedoch gezeigt, dass bei dieser bekannten Art der Datenübertragung die Leitstation einer erheblichen Belastung ausgesetzt ist.

Es ist nun auch schon ein Nachrichtenübertragungssystem bekannt (US-A-4 174 536), welches einen Mikroprozessor aufweist, der über eine Adressbusleitung und über eine Datenbusleitung mit Speichern sowie mit Serien- und Parallel-Schnittstellen verbunden ist. Bei dieser bekannten Schaltungsanordnung ist somit der Mikroprozessor ständig in die Verbindung mit den Busleitungen und damit mit den daran angeschlossenen Einrichtungen einbezogen.

Es ist schliesslich auch schon ein Datenverbindungssystem bekannt (DE-A 1 - 2 831 887), bei dem eine Mehrzahl von sogenannten Untersystemen miteinander verbunden ist. Ein derartiges Untersystem enthält einen Mikroprozessor, der über ein Busleitungssystem mit einer Speicheranordnung sowie mit Ein/Ausgabebausteinen verbunden ist. Auch bei diesem Schaltungsaufbau ist der Mikroprozessor stets in die Verbindung mit den einzelnen an dem Busleitungssystem angeschlossenen Einrichtungen einbezogen.

Der Erfindung liegt nun die Aufgabe zugrunde, einen Weg zu zeigen, wie bei einem Verfahren und einer Schaltungsanordnung der eingangs genannten Art zwischen über ein zentrales Busleitungssystem miteinander verbundenen Anschlussgeräten binäre Signale in praktisch beliebiger Anzahl übertragen werden können, ohne dass dazu unterschiedliche Ablaufprozeduren in Form von gesonderten Befehlsfolgen bereitgestellt werden müssen, nach Massgabe derer die jeweilige Signalübertragung abgewickelt wird.

Gelöst wird die vorstehend aufgezeigte Aufgabe durch die im kennzeichnenden Teil des Anspruchs 1 angegebenen Massnahmen.

Die Erfindung bringt den Vorteil mit sich, dass ohne die Bereitstellung von gesonderten Ablaufprozeduren ausgekommen werden kann, um binäre Signale unterschiedlicher Anzahl von einem Anschlussgerät zu einem anderen Anschlussgerät zu übertragen, ohne dass in diese Übertragung noch eine gesonderte Zwischenspeicheranordnung einzubeziehen ist. In vorteilhafter Weise werden die betreffenden Signale in Form von Signalgruppen oder Bytes oder Bytegruppen übertragen, wobei der Speicherzugriffseinrichtung der Umfang derartiger Signalgruppen bzw. Bytes oder Bytegruppen aus dem Auftreten eines übertragenen Signalübertragungs-Anforderungssignals bekannt ist. In dieser Speicherzugriffseinrichtung ist es dann auf relativ einfache Weise möglich, anhand des den Signalübertragungsumfang angebenden Anforderungssignals die Anzahl der Steuersignale zu bestimmen, die den an der jeweiligen Übertragung beteiligten Anschlussgeräten zur Steuerung der Signalabgabe bzw. der Signalaufnahme zuzuführen sind. Insgesamt ergibt sich durch die Massnahmen gemäss der Erfindung eine relativ starke Entlastung des verwendeten zentralen Prozessors.

Bei Ausgestaltung des Verfahrens gemäss der Erfindung in der im Anspruch 2 angegebenen Weise ergibt sich der Vorteil, dass auf besonders einfache Weise der erwähnte zentrale Prozessor in seinen wirksamen Zustand gesteuert werden kann.

Bei Ausgestaltung des Verfahrens gemäss der Erfindung in der im Anspruch 3 gekennzeichneten Weise ergibt sich der Vorteil eines besonders einfachen Betriebs der einzelnen Anschlussgeräte.

Zur Durchführung des Verfahrens gemäss der Erfindung dient vorzugsweise eine Schaltungsanordnung, bei der sämtliche Anschlussgeräte an einem zentralen Busleitungssystem angeschlossen sind, mit dem eine zentrale Steuereinrichtung verbunden ist, die wenigstens einen zentralen Prozessor, insbesondere einen Mikroprozessor, mit zugehörigen Programm- und Arbeitsspeichern umfasst. Diese Schaltungsanordnung ist erfindungsgemäss durch die im Anspruch 4 angegebenen Merkmale gekennzeichnet. Sie bringt den Vorteil eines insgesamt geringen schaltungstechnischen Aufwands in den einzelnen Anschlussgeräten und damit in der gesamten Übertragungsanlage mit sich.

Bei Ausgestaltung der vorstehend betrachteten Schaltungsanordnung in der im Anspruch 5 angegebenen Weise ergibt sich der Vorteil eines besonders geringen schaltungstechnischen Aufwands in dem jeweiligen Anschlussgerät.

Bei Ausgestaltung der vorstehend betrachteten Schaltungsanordnung in der im Anspruch 6 gekennzeichneten Weise ergibt sich in den einzelnen Anschlussgeräten ein besonders geringer Pufferspeicheraufwand.

Bei Ausgestaltung der vorstehend betrachteten Schaltungsanordnung in der im Anspruch 7 gekennzeichneten Weise wird der Vorteil eines besonders geringen Schaltungsaufwands für die Verbindung der Signalsender bzw. Signalempfänger der einzelnen Anschlussgeräte erzielt.

Anhand von Zeichnungen wird die Erfindung nachstehend beispielsweise näher erläutert.

Fig. 1 zeigt in einem Blockdiagramm den prinzipiellen Aufbau einer Schaltungsanordnung gemäss der Erfindung.

Fig. 2A und 2B zeigen einen möglichen Aufbau eines in einer Mehrzahl bei der Schaltungsanordnung gemäss Fig. 1 vorgesehenen Anschlussgerätes.

Fig. 2C zeigt, wie die Fig. 2A und 2B zusammengehören.

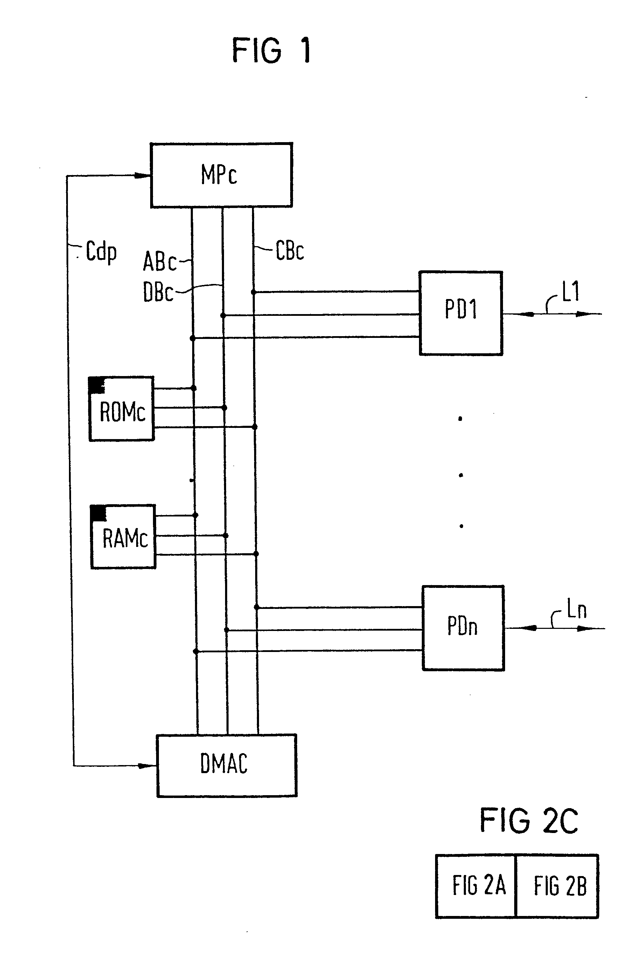

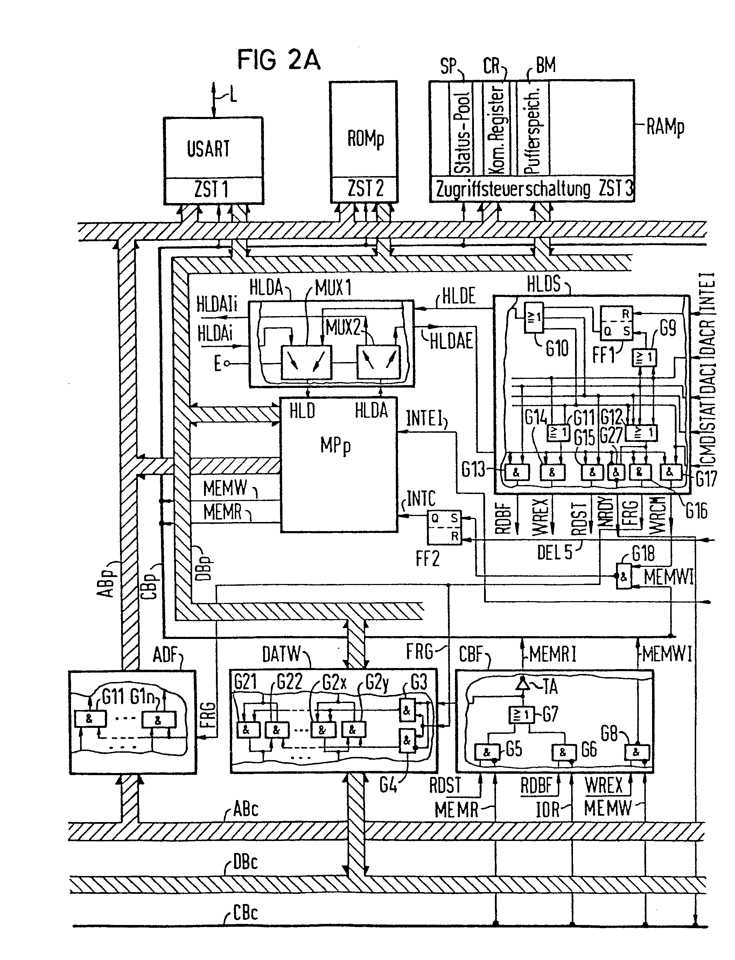

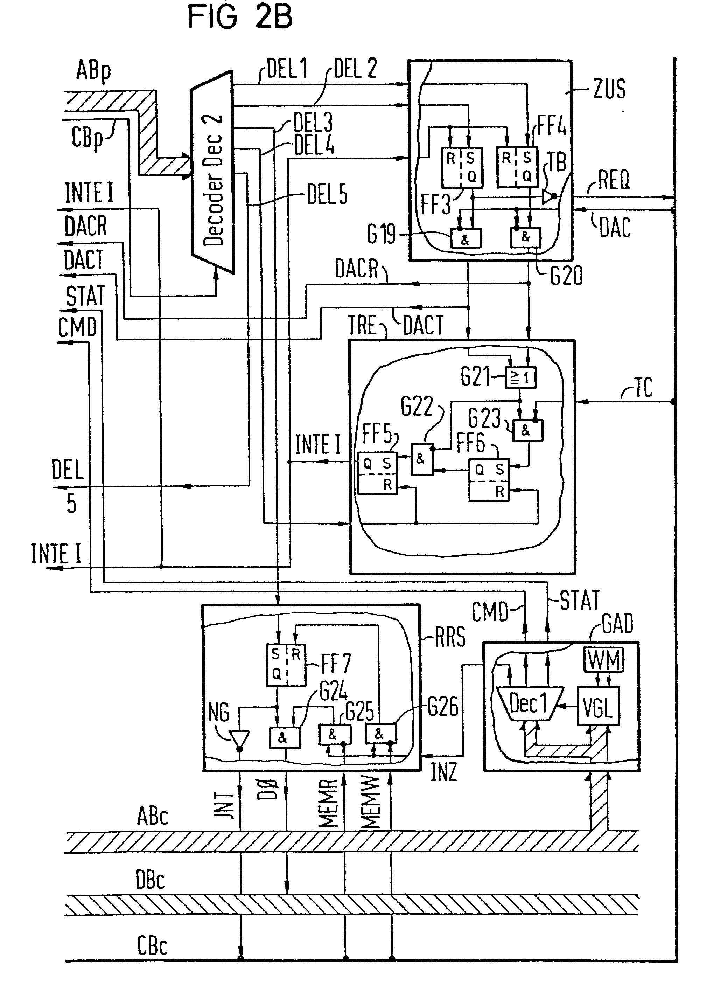

In Fig. 1 ist in einem Blockdiagramm eine Schaltungsanordnung gezeigt, die zur Übertragung von binären Signalen zwischen Anschlussgeräten PD1 bis PDn dient. Diese Anschlussgeräte PD1 bis PDn sind über ein zentrales Busleitungssystem miteinander verbunden. Zu diesem zentralen Busleitungssystem gehören eine Adressbusleitung ABc, eine Datenbusleitung DBc und eine Steuerbusleitung CBc. Jede dieser drei Busleitungen weist normalerweise eine Vielzahl von einzelnen Leitungen, beispielsweise acht oder sechzehn Leitungen auf. Das Anschlussgerät PD1 ist ferner an einer Übertragungsleitung L angeschlossen, die zu zumindest einem Signalsender und/oder zumindest einem Signalempfänger hinführen mag. Das Anschlussgerät PDn ist ebenfalls an einer Übertragungsleitung Ln angeschlossen, die zu wenigstens einem Signalempfänger und/oder wenigstens einem Signalsender hinführen mag.

An dem zentralen Busleitungssystem ist eine die Signalübertragung zwischen den Anschlussgeräten PD1 bis PDn steuernde zentrale Steuereinrichtung angeschlossen, die wenigstens einen zentralen Prozessor MPc und eine für einen direkten Speicherzugriff dienende Speicherzugriffseinrichtung DMAC umfasst. Der zentrale Prozessor MPc ist insbesondere durch einen Mikroprozessor gebildet. Der betreffende zentrale Prozessor MPc ist mit der Speicherzugriffseinrichtung DMAC zusätzlich über eine gesonderte Steuerleitung Cdp verbunden. Über diese Steuerleitung kann der zentrale Prozessor MPc von der Speicherzugriffseinrichtung DMAC her hinsichtlich der Abgabe von Signalen an das zentrale Busleitungssystem unwirksam gesteuert werden. Dies geschieht üblicherweise dadurch, dass die betreffenden Anschlüsse des zentralen Prozessors MPc in den hochohmigen Zustand gesteuert werden.

Der zentralen Steuereinrichtung sind gemäss Fig. 1 noch ein Programmspeicher ROMc und ein Arbeitsspeicher RAMc zugehörig. Der Programmspeicher ROMc ist im vorliegenden Fall ein Lesespeicher, der gegebenenfalls auch programmierbar sein kann. Der Arbeitsspeicher RAMc ist hingegen ein Speicher mit wahlfreiem Zugriff. Der Programmspeicher ROMc und der Arbeitsspeicher RAMc sind mit entsprechenden Anschlüssen an den Busleitungen ABc, DBc, CBc des zentralen Busleitungssystems angeschlossen.

Bevor auf die Arbeitsweise der in Fig. 1 dargestellten Anordnung eingegangen wird, sei zunächst der in Fig. 2A und 2B gezeigte mögliche Aufbau einer der vorgesehenen Anschlussgeräte PD1 bis PDn betrachtet. Die Fig. 2A und 2B sind dabei in der aus Fig. 2C ersichtlichen Weise nebeneinanderzulegen.

Das in Fig. 2A und 2B im einzelnen gezeigte Anschlussgerät weist eine interne Steuereinrichtung auf, die gemäss Fig. 2A durch einen Mikroprozessor MPp gebildet ist. Dieser Mikroprozessor MPp ist mit Adressierungs-, Daten- und Steueranschlüssen an zu einem internen Busleitungssystem gehörenden Busleitungen angeschlossen. Zu diesen Busleitungen gehören eine interne Adressbusleitung ABp, eine interne Datenbusleitung DBp und eine interne Steuerbusleitung CBp. Diese Busleitungen umfassen ebenfalls jeweils eine Mehrzahl von Leitungen. Die Busleitungen ABp, DBp, CBp des interen Busleitungssystems sind über nachstehend noch näher betrachtete Freigabeschaltungen mit den Busleitungen ABc, DBc bzw. CBc des zentralen Busleitungssystems verbunden.

Die interne Adressbusleitung ABp ist mit der zentralen Adressbusleitung ABc über eine Adressenfreigabeschaltung ADF verbunden. Diese Adressenfreigabeschaltung ADF kann eine Anzahl von UND-Gliedern G11 bis G1n enthalten, die eine Adressenübertragung lediglich von der zentralen Adressbusleitung ABc zu der internen Adressbusleitung ABp zulassen. Eine Adressenübertragung in der umgekehrten Richtung ist über die Adressenfreigabeschaltung ADF jedenfalls nicht möglich und auch nicht beabsichtigt. Die Freigabe der Adressenübertragung in der Adressenfreigabeschaltung ADF erfolgt dadurch, dass der betreffenden Adressenfreigabeschaltung ADF über eine Freigabeleitung FRG ein Binärsignal "1" zugeführt wird. Die betreffende Freigabeleitung FRG ist, wie aus Fig. 2A ersichtlich ist, am Ausgang eines NAND-Gliedes G16 angeschlossen.

Die interne Datenbusleitung DBp ist mit der zentralen Datenbusleitung DBc über eine Datenweiche DATW verbunden, die je nach ihrer Einstellung eine Datenübertragung entweder von der zentralen Datenbusleitung DBc zu der interen Datenbusleitung DBp hin oder von der internen Datenbusleitung DBp zu der zentralen Datenbusleitung DBc ermöglicht. Zu diesem Zweck enthält die Datenweiche DATW eine Anzahl von Schalterfunktionen erfüllenden Paaren von UND-Gliedern G21, G22 bis G2x, G2y, die jeweils von einem UND-Glied zweier UND-Glieder G3, G4 angesteuert werden. Das UND-Glied G4 erhält die seinem einen Eingang zugeführten Signale in invertierter Form, so dass es eigentlich die Funktion eines Sperrgliedes erfüllt. Da die beiden jeweils zwei Eingänge aufweisenden UND-Glieder G3 und G4 eingangsseitig einander parallelgeschaltet sind, ist somit sichergestellt, dass auf eine entsprechende Ansteuerung jeweils nur eines dieser beiden UND-Glieder ausgangsseitig ein Binärsignal "1" abgibt. Mit ihren einen Eingängen sind die beiden UND-Glieder G3, G4 gemeinsam am Ausgang des bereits erwähnten NAND-Gliedes G16 angeschlossen. Mit ihren anderen Eingängen sind die beiden UND-Glieder G3, G4 am Ausgang einer Steuerbus-Freigabeschaltung CBF angeschlossen. Die UND-Glieder G21, G22 bis G2x, G2y sind wie die UND-Glieder G11 bis G1n durch sogenannte Tristate-Verknüpfungsglieder gebildet, die bei fehlender Ansteuerung einen hochohmigen Ausgang aufweisen.

Die Steuerbus-Freigabeschaltung CBF verbindet einige Steuerleitungen der zentralen Steuerbusleitung CBc mit einigen der Steuerleitungen der internen Steuerbusleitung CBp. Die mit der zentralen Steuerbusleitung CBc verbundenen Eingangsleitungen sind dabei mit MEMR, IOR und MEMW bezeichnet. Die zu der internen Steuerbusleitung CBp hinführenden Ausgangsleitungen sind mit MEMRI bzw. MEMWI bezeichnet. Die Steuerbus-Freigabeschaltung CBF enthält drei UND-Glieder G5, G6, G8, die mit ihren einen Eingängen mit den Leitungen MEMR, IOR bzw. MEMW verbunden sind. Mit ihren anderen Eingängen sind die betreffenden UND-Glieder G5, G6 und G8 an Leitungen RDST bzw. RDBF bzw. WREX angeschlossen, die zu einer Verknüpfungsschaltungsanordnung HLDS der in Fig. 2A gezeigten Anordnung hinführen. Die Ausgänge der beiden UND-Glieder G5 und G6 sind an den Eingängen eines ODER-Gliedes G7 angeschlossen. Mit dem Ausgang des ODER-Gliedes G7 ist die bereits erwähnte Steuerleitung verbunden, die von der Steuerbus-Freigabeschaltung CBF zu der Datenweiche DATW hinführt. Ausserdem ist mit dem Ausgang des ODER-Gliedes G7 über einen Trennverstärker TA die bereits erwähnte Ausgangsleitung MEMRI verbunden. Die andere bereits erwähnte Ausgangsleitung MEMWI ist mit dem Ausgang des UND-Gliedes G8 verbunden. Diese Leitung führt zu einem Eingang des NAND-Gliedes G18 hin.

Zu der internen Steuereinrichtung des in Fig. 2A und 2B als Ausführungsbeispiel gezeigten Anschlussgerätes gehört nun nicht nur der in Fig. 2A dargestellte Mikroprozessor MPp, sondern zu dieser internen Steuereinrichtung gehören auch noch ein Programmspeicher ROMp und ein Arbeits- bzw. Datenspeicher RAMp. Diese beiden Speicher ROMp, RAMp sind jeweils über eine eigene Zugriffssteuerschaltung ZST2 bzw. ZST3 mit entsprechenden Anschlüssen an sämtlichen Busleitungen des internen Busleitungssystems angeschlossen.

An dem internen Busleitungssystem ist gemäss Fig. 2A noch eine Schnittstellenschaltung USART über eine zugehörige Zugriffssteuerschaltung ZST1 angeschlossen. Diese Schnittstellenschaltung USART ist andererseits mit einer Übertragungsleitung L verbunden, an der wenigstens ein Signalsender bzw. ein Signalempfänger angeschlossen sein kann, der zur Abgabe bzw. Aufnahme von binären Signalen vorgesehen ist. Bei dem betreffenden Signalsender bzw. Signalempfänger mag es sich insbesondere um eine Fernschreibmaschine oder um einen Synchron-Datenanschluss handeln. An dieser Stelle sei angemerkt, dass eine Mehrzahl von Signalsendern/Signalempfängern über eine entsprechende Anzahl von Schnittstellenschaltungen an dem internen Busleitungssystem angeschlossen sein kann.

Der zu der internen Steuereinrichtung des Anschlussgerätes gemäss Fig. 2A und 2B gehörende Mikroprozessor MPp ist mit einem Haltesignaleingang HLD und mit einem Haltesignal-Ausgang HLDA an einer Haltesignal-Übertragungsschaltung HLDA angeschlossen, die im vorliegenden Fall zwei Weichenschaltungen bzw. Multiplexerschaltungen MUX1, MUX2 enthalten mag. Diese Multiplexerschaltungen MUX1, MUX2 werden durch ein einem Steuereingang E zuführbares Steuersignal (Binärsignal "0" oder Binärsignal "1") so gesteuert, dass sie die betreffenden Anschlüsse HLD, HLDA des Mikroprozessors MPp entweder mit den Leitungen HLDE, HLDAE oder mit den Leitungen HLDAIi, HLDAi verbinden. An den zuletzt genannten Leitungen kann beispielsweise eine Speicherzugriffseinrichtung (DMA-Baustein) angeschlossen sein.

Die beiden Leitungen HLDE und HLDAE verbinden die Haltesignal-Übertragungsschaltung HLDA mit der oben bereits erwähnten Verknüpfungsschaltungsanordnung HLDS. Die Leitung HLDE ist dabei mit dem Ausgang eines zu der Verknüpfungsschaltungsanordnung HLDS gehörenden ODER-Gliedes G10 verbunden. Die Leitung HLDAE ist mit den einen Eingängen von UND-Gliedern G13, G14, G15, G16, G17 und G27 der Verknüpfungsschaltungsanordnung HLDS verbunden.

Die zuletzt erwähnten UND-Glieder G13 bis G17 der Verknüpfungsschaltungsanordnung HLDS sind ausgangsseitig mit den in Fig. 2A bezeichneten Leitungen RDBF, WREX, RDST, FRG bzw. WRCM verbunden. Die Leitungen WDBF, WREX und RDST führen zu entsprechenden Eingängen der Steuerbus-Freigabeschaltung CBF hin. Die Leitung FRG, die als Freigabeleitung bezeichnet werden mag, führt zu entsprechenden Freigabeeingängen der Adressenfreigabeschaltung ADF und der Datenweiche DATW hin. Die Leitung WRCM ist mit dem zweiten Eingang des bereits erwähnten NAND-Gliedes G18 verbunden.

Das UND-Glied G13 der Verknüpfungsschaltungs-

anordnung HLDS ist mit seinem noch nicht betrachteten Eingang mit einem Eingang der betreffenden Schaltung HLSD verbunden, zu welchem eine Leitung DACT hinführt, die an einem Ausgang einer in Fig. 2B dargestellten Zugriffssteuereinrichtung ZUS angeschlossen ist. Mit dem gerade betrachteten Eingang der Verknüpfungsschaltungsanordnung HLDS sind ferner zwei ODER-Glieder G9 und G12 mit jeweils einem Eingang verbunden. Das ODER-Glied G9 ist mit einem weiteren Eingang zusammen mit einem Eingang eines ODER-Gliedes G11 an einem Eingang der Verknüpfungsschaltungsanordnung HLDS angeschlossen, mit welchem eine Leitung DACR verbunden ist, die an einem weiteren Ausgang der Zugriffssteuereinrichtung ZUS angeschlossen ist.

Das zuvor erwähnte ODER-Glied G9 ist ausgangsseitig am Setzeingang S eines bistabilen Kippgliedes FF1 angeschlossen. Mit seinem Rücksetzeingang R ist das betreffende bistabile Kippglied FF1 an einem Eingang der Verknüpfungsschaltungsanordnung HLDS angeschlossen, mit dem eine Leitung INTEI verbunden ist, die am Ausgang einer das Ende einer Signalübertragung anzeigenden Anzeigeschaltung TRE angeschlossen ist. Mit seinem im Setzzustand ein Binärsignal "1" führenden Ausgang Q ist das bistabile Kippglied FF1 an einem Eingang des ODER-Gliedes G10 angeschlossen. Mit zwei weiteren Eingängen ist das betreffende ODER-Glied G10 mit entsprechenden Eingängen des ODER-Gliedes G12 an Eingängen der Verknüpfungsschaltungsanordnung HLDS angeschlossen, mit denen zwei Leitungen STAT bzw. CMD verbunden sind, die von einer in Fig. 2B angedeuteten Adressendetektoreinrichtung GAD wegführen.

Das bereits erwähnte ODER-Glied G11 ist mit seinem noch nicht betrachteten Eingang mit dem mit der Leitung CMD verbundenen Eingang der Verknüpfungsschaltungsanordnung HLDS verbunden. Mit seinem Ausgang ist das ODER-Glied G11 mit einem weiteren Eingang des UND-Gliedes G14 verbunden.

Das UND-Glied G15 ist mit seinem zweiten Eingang mit dem mit der Leitung STAT verbundenen Eingang der Verknüpfungsschaltungsanordnung HLDS verbunden. Das UND-Glied G16 ist mit seinem zweiten Eingang am Ausgang des ODER-Gliedes G12 angeschlossen. Das UND-Glied G17 ist mit seinem zweiten Eingang direkt mit dem mit der Leitung CMD verbundenen Eingang der Verknüpfungsschaltungsanordnung HLDS verbunden.

Das UND-Glied G27 ist mit einem (eine Invertierung vornehmenden) Eingang an der Leitung HLDAE und mit einem weiteren Eingang am Ausgang des ODER-Gliedes G12 angeschlossen. Der (invertierende) Ausgang des UND-Gliedes (Tristate-Verknüpfungsgliedes) G27 ist über eine Leitung NRDY mit der Steuerbusleitung CBc verbunden.

Die in Fig. 2B gezeigte Zugriffssteuereinrichtung ZUS weist ein als Sendekippstufe ausgenutztes bistabiles Kippglied FF3 und ein als Empfangskippstufe ausgenutztes bistabiles Kippglied FF4 auf. Das Kippglied FF3 ist mit seinem Setzeingang S an einer Ausgangsleitung DEL2 eines Decoders Dec2 angeschlossen; das Kippglied FF4 ist mit seinem Setzeingang S an einer Ausgangsleitung DEL1 dieses Decoders Dec2 angeschlossen. Der Decoder Dec2 ist eingangsseitig an der internen Adressbusleitung ABp und ausserdem an wenigstens einer Steuerleitung der internen Steuerbusleitung CBp angeschlossen.

Der Decoder Dec2, der jeweils nur an einem seiner Ausgänge ein binäres Ausgangssignal "1" abzugeben vermag, ist mit weiteren Ausgängen mit den Leitungen DEL3, DEL4 bzw. DEL5 verbunden. Die Leitung DEL3 führt zu einem Eingang einer Transferende-Steuereinrichtung RRS, die im unteren Teil der Fig. 2B angedeutet ist. Dabei ist ein bistabiles Kippglied FF7 mit seinem Setzeingang S mit der betreffenden Leitung DEL3 verbunden. Die Leitung DEL4 führt zu einem Eingang der bereits erwähnten Anzeigeschaltung TRE hin; mit diesem Eingang mögen die Rücksetzeingänge R zweier bistabiler Kippglieder FF5 und FF6 verbunden sein. Die Leitung DEL5 führt zum Rücksetzeingang R des in Fig. 2A angedeuteten bistabilen Kippgliedes FF2 hin. Dieses bistabile Kippglied ist mit seinem im Setzzustand ein Binärsignal "1" führenden Ausgang Q mit einem Unterbrechungseingang INTC des Mikroprozessors MPp verbunden. Mit einem weiteren Unterbrechungseingang des Mikroprozessors MPp ist die Leitung INTEI verbunden.

Mit der zuletzt erwähnten Leitung INTEI ist ferner ein Eingang der bereits erwähnten Zugriffssteuereinrichtung ZUS verbunden. Mit diesem Eingang mögen die Rücksetzeingänge R der beiden bistabilen Kippglieder FF3 und FF4 verbunden sein. Das bistabile Kippglied FF3 ist mit seinem Q-Ausgang an einem Eingang eines UND-Gliedes G19 angeschlossen. Ausserdem ist das bistabile Kippglied FF3 mit seinem Q-Ausgang über eine Anforderungssignal-Leitung REQ mit der zentralen Steuerbusleitung CBc verbunden. Über eine Zugriffssteuerleitung DAC ist ein weiterer Eingang der Zugriffssteuereinrichtung ZUS mit einer Leitung der zentralen Steuerbusleitung CBc verbunden. Mit diesem Eingang der Zugriffssteuereinrichtung ZUS sind ein weiterer Eingang des UND-Gliedes G19 und ein Eingang eines UND-Gliedes G20 verbunden. Dieses UND-Glied G20 ist mit einem weiteren Eingang am Q-Ausgang des bistabilen Kippgliedes FF4 angeschlossen.

Die Ausgänge der beiden UND-Glieder G19, G20 sind mit den oben bereits erwähnten Leitungen DACT bzw. DACR verbunden. Ausserdem sind die betreffenden Ausgänge der beiden UND-Glieder G19, G20 an den Eingängen eines zu der Anzeigeschaltung TRE gehörenden ODER-Gliedes G21 angeschlossen. Dieses ODER-Glied G21 ist ausgangsseitig an einem (negierenden) Eingang eines eine Sperrgliedfunktion erfüllenden UND-Gliedes G22 und an einem Eingang eines UND-Gliedes G23 angeschlossen. Das UND-Glied G23 ist mit einem weiteren Eingang mit einer Leitung TC verbunden, die an einer Leitung der zentralen Steuerbusleitung CBc angeschlossen ist. Mit seinem Ausgang ist das UND-Glied G23 am Setzeingang S des bistabilen Kippgliedes FF6 angeschlossen. Der Q-Ausgang des bistabilen Kippgliedes FF6 ist mit dem zweiten Eingang des UND-Gliedes G22 angeschlossen, welches ausgangsseitig mit dem Setzeingang S des bistabilen Kippgliedes FF5 verbunden ist. Der Q-Ausgang des bistabilen Kippgliedes FF5 ist mit der oben bereits erwähnten Leitung INTEI verbunden.

Die in Fig. 2B näher gezeigte Adressendetektoreinrichtung GAD enthält einen Vergleicher VGL, der mit seiner einen Eingangsseite an der Adressbusleitung ABc des zentralen Busleitungssystems angeschlossen ist und der mit seiner anderen Eingansseite am Ausgang eines Wortspeichers WM angeschlossen ist. In diesem Wortspeicher WM ist eine für das betreffende Anschlussgerät spezifische Adresse enthalten, bei deren Auftreten auf der Adressbusleitung ABc der Vergleicher VGL ausgangsseitig ein Binärsignal "1" zur Freigabe des Decoders Dec1 abgibt, der eingangsseitig ebenfalls an der Adressbusleitung ABc des zentralen Busleitungssystems angeschlossen ist. Dieser Decoder Dec1 gibt im vorliegenden Fall an jeweils einen seiner drei angedeuteten Ausgänge ein Binärsignal "1" auf eine entsprechende Decodierung einer ihm eingangsseitig zugeführten Adresse ab. Mit den betreffenden Ausgängen des Decoders Dec1 sind die oben bereits erwähnten Leitungen STAT und CMD verbunden. Ausserdem ist mit einem Ausgang des Decoders Dec1 eine Leitung INZ verbunden, die mit den einen Eingängen zweier UND-Glieder G25, G26 der Transferende-Steuereinrichtung RRS gemäss Fig. 2B verbunden ist. Diese beiden UND-Glieder G25 und G26 sind mit ihren anderen Eingängen über eine Leitung MEMR bzw. über eine Leitung MEMW mit entsprechenden Steuereinrichtungen der zentralen Steuerbusleitung CBc des zentralen Steuerbusleitungssystems verbunden.

Das zu der erwähnten Transferende-Steuereinrichtung RRS gehörende bistabile Kippglied FF7 ist mit seinem Rücksetzeingang R mit dem Ausgang des UND-Gliedes G26 verbunden. Mit seinem Q-Ausgang ist das bistabile Kippglied FF7 mit einem Eingang eines UND-Gliedes G24 verbunden, welches mit einem weiteren Eingang am Ausgang des UND-Gliedes G25 angeschlossen ist. Der Ausgang des UND-Gliedes G24, bei dem es sich ebenfalls um ein sogenanntes Tristate-Verknüpfungsglied handeln mag, ist über eine Leitung DØ mit einer Leitung der zentralen Datenbusleitung DBc verbunden. Der erwähnte Q-Ausgang des bistabilen Kippgliedes FF7 ist ferner über einen Negator NG und eine Leitung INT mit einer Leitung der zentralen Steuerbusleitung CBc verbunden.

Nachdem zuvor der in Fig. 2A und 2B gezeigte mögliche Aufbau eines der bei der Schaltungsanordnung gemäss Fig. 1 vorgesehenen Anschlussgeräte erläutert worden ist, sei nunmehr zunächst generell die Arbeitsweise der in Fig. 1 dargestellten Schaltungsanordnung betrachtet. Danach wird auf Einzelheiten dieser Arbeitsweise unter Bezugnahme auf Fig. 2A und 2B eingegangen.

Bei der in Fig. 1 dargestellten Schaltungsanordnung erfolgt die Übertragung von binären Signalen, insbesondere von Bitgruppen bzw. Bytes oder Bytegruppen, zwischen den dort angedeuteten Anschlussgeräten PD1 und PDn dadurch, dass von dem einen Anschlussgerät, beispielsweise dem Anschlussgerät PD1, zunächst ein Meldesignal an die zentrale Steuereinrichtung abgegeben bzw. von dieser abgeholt wird. Dieses Meldesignal bezeichnet das Vorliegen eines Signalübertragungswunsches von dem betreffenden meldenden Anschlussgerät zu wenigstens einem anderen Anschlussgerät hin, wie dem Anschlussgerät PDn. Derartige Meldesignale werden in dem Datenspeicher RAMc der zentralen Steuereinrichtung abgespeichert. Der zentrale Prozessor MPc dieser zentralen Steuereinrichtung überprüft anhand derartiger Meldesignale die einzelnen Anschlussgeräte, die diese Meldesignale abgegeben haben, daraufhin, ob bereits in diesen Anschlussgeräten Signale für eine Signalübertragung verfügbar sind. Dieser Prüfvorgang kann ein zyklischer Abfragevorgang sein, durch den auch das obengenannte Meldesignal von der zentralen Steuereinrichtung abgeholt werden kann.

Auf die Ermittelung des Vorhandenseins einer eine Signalübertragung fordernden Anzahl von Signalen in einem Anschlussgerät, wie dem Anschlussgerät PD1, gibt dieses Anschlussgerät auf seine entsprechende Überprüfung hin ein Signalübertragungs-Anzeigesignal an die zentrale Steuereinrichtung ab. Von dieser zentralen Steuereinrichtung, und zwar insbesondere von dem zentralen Prozessor MPc der zentralen Steuereinrichtung werden den für die Signalaufnahme bestimmten Anschlussgeräten, im vorliegenden Fall dem Anschlussgerät PDn, ein diese bzw. dieses jeweils aus einem Ausgangszustand in einen Empfangszustand überführendes Einstellsignal zugeführt. Ausserdem wird dem Anschlussgerät PD1 ein dieses aus einem Ausgangszustand in einen Sendezustand überführendes Einstellsignal zugeführt.

Nach der somit erfolgten Einstellung der in eine Signalübertragung einzubeziehenden Anschlussgeräte PD1, PDn wird z.B. von dem in den Sendezustand gesetzten Anschlussgerät PD1 ein Steuersignal abgegeben (über die Leitung REQ), welches die Abwicklung einer Signalübertragung zu den in den Empfangszustand gesetzten Anschlussgeräten (PDn) anfordert. Die Speicherzugriffseinrichtung DMAC wurde zuvor von dem zentralen Prozessor MPc über den Umfang der Signalübertragung und den Adressenbereich informiert, der für die Signalübertragung in den Anschlussgeräten vorgesehen ist. Ausserdem wird von der Speicherzugriffseinrichtung DMAC der zentralen Steuereinrichtung ein den zentralen Prozessor MPc hinsichtlich der Abgabe von Signalen an das zentrale Busleitungssystem unwirksam steuerndes Steuersignal abgegeben. Dieses Steuersignal wird über die Steuerleitung Cdp übertragen. Damit übernimmt nunmehr die Speicherzugriffseinrichtung DMAC Steueraufgaben. Im Zuge derartiger Steueraufgaben werden von der Speicherzugriffseinrichtung DMAC anschliessend gesonderte Steuersignale zusammen mit den erforderlichen Adressen in wechselnder Folge an die betreffenden Anschlussgeräte PD1, PDn abgegeben. Dabei werden zwei verschiedene Steuersignale abgegeben; das eine Steuersignal dient zur Steuerung der Abgabe von binären Signalen von dem im Sendezustand befindlichen Anschlussgerät PD1, und das andere Steuersignal dient zur Steuerung der Aufnahme dieser binären Signale durch die im Empfangszustand befindlichen Anschlussgeräte, im vorliegenden Fall also des Anschlussgerätes PDn.

Nach der Übertragung des letzten Signals der für eine Signalübertragung zu berücksichtigenden Anzahl von Signalen wird von der Speicherzugriffseinrichtung DMAC an die betreffenden Anschlussgeräte PD1, PDn ein diese aus ihrem Sendezustand bzw. Empfangszustand jeweils in den Ausgangszustand zurücksetzendes Rücksetzsignal abgegeben. Dadurch laufen in den betreffenden Anschlussgeräten Rücksetzprozeduren ab. Ausserdem wird als Folge des Rücksetzens des Anschlussgerätes PD1 in den Ausgangszustand der zentrale Prozessor MPc seinen zuvor unterbrochenen Betrieb wieder fortsetzen. Das Rücksetzen des Anschlussgerätes PD1 in den Ausgangszustand führt ferner dazu, dass die Übertragungsanforderung von dem Anschlussgerät PD1 verschwindet.

Während der Signalübertragungsphase ist der zentrale Prozessor MPc unwirksam; dabei übernimmt die Speicherzugriffseinrichtung DMAC Steuerungsaufgaben, von denen der zentrale Prozessor MPc somit entlastet ist. Damit kann die Speicherzugriffseinrichtung DMAC während der Dauer, während der der zentrale Prozessor MPc unwirksam gesteuert ist, den Adressenvorrat dieses zentralen Prozessors MPc für die Ansteuerung der einzelnen Anschlussgeräte ausnutzen, und zwar in Verbindung mit einem gesonderten Steuersignal, welches in Verbindung mit den betreffenden Adressen von dem zentralen Prozessor MPc normalerweise nicht auftritt. Damit ist also eine Erweiterung des gesamten Adressenvorrates erreicht. Es ist aber auch möglich, dass in der Speicherzugriffseinrichtung DMAC zur Ansterung der Anschlussgeräte, insbesondere zur Ansteuerung der Pufferspeicher der Anschlussgeräte, Adressen herangezogen werden, die von dem zentralen Prozessor MPc nicht verwendet werden.

In der vorstehend erläuterten Weise können nun nicht nur binäre Signale von einem Anschlussgerät zu einem anderen Anschlussgerät über das zentrale Busleitungssystem übertragen werden, sondern es können auch binäre Signale von einem Anschlussgerät zu einer Vielzahl von weiteren Anschlussgeräten im Rahmen eines Signalverteilungsvorganges über das zentrale Busleitungssystem übertragen werden. Dabei können die von einem Anschlussgerät abgegebenen binären Signale entweder gleichzeitig an sämtliche in Frage kommenden weiteren Anschlussgeräte abgegeben werden, oder aber die betreffenden binären Signale können nacheinander diesen weiteren Anschlussgeräten sequentiell zugeführt werden.

Im folgenden sei der Verfahrensablauf in einem der an einer Signalübertragung beteiligten Anschlussgeräte unter Bezugnahme auf Fig. 2A und 2B näher erläutert. In diesem Zusammenhang sei zunächst angenommen, dass sich das in Fig. 2A und 2B dargestellte Anschlussgerät in seinem Ausgangszustand befindet, der ein Bereitschaftszustand für die Aufnahme von Daten darstellenden binären Signalen ist. Treten in diesem Zustand auf der Übertragungsleitung L Daten auf, beispielsweise Signalisierungszeichen, die eine Einspeicherung in den Pufferspeicher BM des Datenspeichers RAMp bewirken sollen, so laufen folgende Vorgänge ab.

Die auf der Übertragungsleitung L auftretenden binären Signale werden zunächst von der Schnittstellenschaltung USART aufgenommen. Das Vorhandensein von derartigen Signalen in der Schnittstellenschaltung USART wird mit Hilfe des internen Mikroprozessors MPp z.B. zyklisch wiederholt abgefragt. Wird im Zuge einer solchen Abfrage festgestellt, dass von der Schnittstellenschaltung USART binäre Signale aufgenommen worden sind, so steuert der Mikroprozessor MPp die Umspeicherung bzw. Einspeicherung dieser Signale in den Pufferspeicher BM oder in mit diesem verbundene Vorpuffer des Datenspeichers RAMp. Mit der aufeinanderfolgenden Einspeicherung derartiger binärer Signale in den Pufferspeicher BM (nach ggf. erfolgter Zwischenspeicherung in einem Vorpuffer) werden in dem zugehörigen Status-Pool SP des Datenspeichers RAMp Angaben über den Umfang der in dem Pufferspeicher BM eingespeicherten binären Signale eingetragen. Diese Angaben sind also für den Umfang der erforderlichen Signalübertragung zwischen dem gerade betrachteten Anschlussgerät und mindestens einem weiteren Anschlussgerät massgebend. Bezüglich des Pufferspeichers BM sei noch bemerkt, dass dessen Adressenbereich festgelegt sein kann oder während der Ermittlung eines Signalübertragungswunsches von einem Anschlussgerät angegeben werden kann.

Zweckmässigerweise wird jedoch jeder Pufferspeicher in eine Mehrzahl von Speicherbereichen unterteilt sein, um eine Vielzahl von Binärsignalen speichern zu können. Dabei kann dann im einzelnen so vorgegangen werden, dass durch die dem im Sendezustand befindlichen Anschlussgerät zugehörige Steuereinrichtung zunächst die für eine Übertragung zum Pufferspeicher wenigstens eines im Empfangszustand befindlichen Anschlussgerätes in Frage kommenden Binärsignale aus sie enthaltenden einzelnen Vorspeicherbereichen des zugehörigen Pufferspeichers nacheinander in einen durch eine festgelegte Adresse bezeichneten gesonderten Speicherbereich des betreffenden Pufferspeichers eingespeichert werden.

Mit der Abgabe der betreffenden festgelegten Adresse durch die zentrale Steuereinrichtung wird ein Lesebefehlssignal bzw. ein Schreibbefehlssignal an die Pufferspeicher der in eine Signalübertragung einbezogenen Anschlussgeräte abgegeben. Mit Auftreten des Lesebefehlssignals und des Schreibbefehlsignals werden dann die in dem gesonderten Speicherbereich des Pufferspeichers des im Sendezustand befindlichen Anschlussgerätes gespeicherten Binärsignale ausgelesen und in einen entsprechend adressierten Speicherbereich des Pufferspeichers des jeweiligen im Empfangszustand befindlichen Anschlussgerätes eingeschrieben. Die in dem betreffenden gesonderten Speicherbereich des Pufferspeichers des jeweiligen im Empfangszustand befindlichen Anschlussgerätes eingeschriebenen Binärsignale werden dann unter der Steuerung durch die dem jeweiligen im Empfangszustand befindlichen Anschlussgerät zugehörige Steuereinrichtung (das ist der Mikroprozessor MPp) in andere Speicherbereiche des betreffenden Pufferspeichers umgespeichert, bevor sie von dem betreffenden Anschlussgerät abgegeben werden. Dabei wird der Pufferspeicher jedes Anschlussgerätes wahlweise zur Abgabe bzw. zur Aufnahme von Binärsignalen an wenigstens einen bzw. von wenigstens einem anderen entsprechenden Pufferspeicher herangezogen.

Bevor auf die Vorgänge im Zusammenhang mit der Übertragung von binären Signalen über das zentrale Busleitungssystem näher eingegangen wird, sei zunächst eine Voraussetzung betrachtet, die im vorliegenden Fall erfüllt sein muss. Diese Voraussetzung besteht darin, dass der zentralen Steuereinrichtung gemäss Fig. 1 bereits bekannt ist, welche Anschlussgeräte binäre Signale für eine Übertragung bereitstellen wollen und zu welchen Anschlussgeräten diese binären Signale übertragen werden sollen. Derartige Angaben werden zweckmässigerweise in dem Speicherspeicher RAMc der zentralen Steuereinrichtung abgespeichert sein. Diese Angaben können von dem jeweiligen in Frage kommenden Anschlussgerät, wie dem in Fig. 2A und 2B dargestellten Anschlussgerät über die zugehörige Datenweiche DATW abgegeben sein. Dabei können die betreffenden Angaben, die Adressen darstellen, die unter der Steuerung des zentralen Mikroprozessors MPc beispielsweise aus dem Datenspeicher RAMp ausgelesen worden sind.

Aufgrund des Vorliegens der Adressen der an einer Signalübertragung zu beteiligenden Anschlussgeräte in der zentralen Steuereinrichtung — diese Adressen stellen also Meldesignale dar — fragt der zu der zentralen Steuereinrichtung gehörende zentrale Prozessor MPc wiederholt diejenigen Anschlussgeräte auf das Vorliegen von Signalübertragungswünschen ab, die als Anschlussgeräte erfasst sind, von welchen binäre Signale zu anderen Anschlussgeräten zu übertragen sind. Zu diesem Zweck gibt der zentrale Prozessor MPc zyklisch aufeinanderfolgend die Adressen der betreffenden Anschlussgeräte ab. Diese Adressen treten auf der zentralen Adressbusleitung ABc auf. Im Falle des in Fig. 2A und 2B gezeigten Anschlussgerätes wird eine solche Adresse von der Adressendetektoreinrichtung GAD aufgenommen und mit der das betreffende Anschlussgerät bezeichnenden Adresse verglichen, die in dem Wortspeicher WM enthalten ist. Stellt der vorgesehene Vergleicher VGL eine Übereinstimmung der miteinander verglichenen Adressen fest, so gibt er den Decoder Dec1 für die Decodierung zumindest eines Teiles der von der zentralen Adressbusleitung ABc zugeführten Adressen frei. Im vorliegenden Fall gibt der Decoder Dec1 ausgangsseitig ein Binärsignal "1" über die Leitung STAT ab. Das Auftreten dieses Binärsignals "1" bewirkt, dass über das ODER-Glied G10 und die Leitung HLDE ein Anhaltesignal an den Eingang HLD des Mikroprozessors MPp abgegeben wird, der daraufhin mit der Ausführung seiner Operationen aufhört. Ist der Mikroprozessor MPp stillgesetzt, so gibt er ein diesen Zustand angebendes Quittungssignal vom Ausgang HLDA in Form eines Binärsignals "1" ab. Während der Zeitspanne zwischen dem Auftreten eines Binärsignals "1" auf der Leitung STAT und dem Auftreten eines Binärsignals "1" auf der Leitung HLDAE gibt das UND-Glied G27 über die Leitung NRDY ein "0"-Signal an die zentrale Steuerbusleitung CBc ab. Durch dieses Signal wird (der zentralen Steuereinrichtung) signalisiert, dass das betreffende Anschlussgerät noch nicht bereit ist für eine Signal- bzw. Steuersignalaufnahme. Eine solche Bereitschaft ist erst dann gegeben, wenn das "1"-Signal auf der Leitung HLDAE vorhanden ist. Dieses Binärsignal "1" gelangt ferner zu den einen Eingängen der UND-Glieder G13 bis G17 hin. Von diesen UND-Gliedern sind im vorliegenden Fall die beiden UND-Glieder G15 und G16 übertragungsfähig; sie geben ausgangsseitig jeweils ein Binärsignal "1" ab. Das vom Ausgang des UND-Gliedes G15 abgegebene Binärsignal "1" bewirkt zusammen mit einem zugleich auf der Steuerleitung MEMR von der zentralen Steuereinrichtung her abgegebenen Binärsignal "1", dass ein entsprechendes Steuersignal (Binärsignal "1") über die Leitung MEMRI an die interne Steuerbusleitung CBp abgegeben wird. Ausserdem wird den UND-Gliedern G3 und G4 der Datenweichen DATW sowohl vom Ausgang der Steuerbus-Freigabeschaltung CBF als auch über die Leitung FRG jeweils ein Binärsignal "1" zugeführt. Damit sind die UND-Glieder G21 bis G2x dieser Datenweiche DATW übertragungsfähig.

Das auf der Leitung FRG auftretende Binärsignal "1" bewirkt ferner, dass die UND-Glieder G11 bis G1n der Adressenfreigabeschaltung ADF übertragungsfähig gesteuert werden.

Die auf der zentralen Adressbusleitung ABc auftretende Adresse, zumindest aber ein Teil dieser Adresse, bewirkt zusammen mit dem über die Steuerleitung MEMRI abgegebenen Steuersignal, dass in dem Status-Pool SP des Datenspeichers RAMp enthaltene Statusangaben abgefragt und über die interne Datenbusleitung DBp sowie die Datenweiche DATW zu der zentralen Datenbusleitung DBc übertragen werden. Solche Abfragevorgänge können über mehrere Zyklen abgewickelt werden. Nach Verschwinden des Binärsignals "1" auf der Leitung STAT gelangt der Mikroprozessor MPp des gerade betrachteten Anschlussgerätes wieder in seinen normalen Zustand, in welchem er Steueraufgaben nach Massgabe des in seinem zugehörigen Programmspeicher ROMp enthaltenen Programms abwickelt.

Der zentrale Prozessor MPc erkennt anhand der Statusangaben das Vorliegen eines Signalübertragungswunsches betreffend die eigentliche Übertragung von binären Signalen zwischen den bereits bezeichneten Anschlussgeräten. Daraufhin gibt der zentrale Prozessor MPc ein Kommandosignal erst an die für den Empfangszustand vorgesehenen Anschlussgeräte und dann an das für den Sendezustand vorgesehene Anschlussgerät ab. Die betreffenden Statusangaben liefern eine Angabe darüber, welchen Umfang die vorzunehmende Signalübertragung aufweist, d.h. wieviele binäre Signale bzw. Bytes oder Bytegruppen zu übertragen sind.

Bei dem in Fig. 2A und 2B dargestellten Anschlussgerät führt das Auftreten der als Folge des Kommandosignals abgegebenen Anschlussgeräteadresse dazu, dass die zugehörige Adressendetektoreinrichtung GAD über die Kommandoleitung CMD ein Binärsignal "1" abgibt. Das Auftreten dieses Binärsignals "1" hat zur Folge, dass der zugehörige interne Mikroprozessor MPp wieder in seinen Haltezustand überführt wird und dass daraufhin Binärsignale "1" auf den Leitungen WREX, FRG und WRCM auftreten. Dadurch wird zusammen mit dem auf der Steuerleitung MEMW auftretenden Steuersignal (Binärsignal "1") bewirkt, dass ein zu dem betreffenden Zeitpunkt auf der zentralen Datenbusleitung DBc auftretendes Einstellsignal in das Kommandoregister CR des internen Datenspeichers RAMp eingeschrieben wird.

Das Auftreten der Binärsignale "1" auf den beiden Leitungen WRCM und MEMWI führt ausserdem dazu, dass mit der Rückflanke des Binärsignals "1" auf der Leitung MEMWI das bistabile Kippglied FF2 über das NAND-Glied G18 gesetzt wird. Dadurch wird dann der Unterbrechungseingang INTC des Mikroprozessors MPp angesteuert, der daraufhin in einen Zustand gelangt, in welchem ein Einstellvorgang abgewickelt wird. Ferner gibt der Mikroprozessor MPp nunmehr über die interne Adressbusleitung ABp eine Adresse ab, die der Decoder Dec2 nach Abgabe eines Binärsignals "1" über die Leitung DEL1 (bei für den Empfangszustand vorgesehenen Anschlussgeräten) bzw. über die Leitung DEL2 (bei für den Sendezustand vorgesehenen Anschlussgeräten) decodiert. Das Auftreten dieses Binärsignals "1" führt zum Setzen der Empfangskippstufe FF4 bzw. der Sendekippstufe FF3. Von der Sendekippstufe FF3 wird dann ein Binärsignal "1" als Anforderungssignal über die Leitung REQ an die zentrale Steuereinrichtung gemäss Fig. 1 abgegeben.

Eine sodann von dem Mikroprozessor MPp abgegebene und durch den Decoder Dec2 aufgenommene Löschadresse führt schliesslich zur Abgabe eines Binärsignals "1" über die Leitung DEL5 und damit zum Rücksetzen des Kippgliedes FF2. Am Ende dieser Unterbrechungsprozedur führt der Mikroprozessor MPp wieder das zuvor unterbrochene Programm weiter aus.

Nunmehr befinden sich also die in eine Signalübertragung einzubeziehenden Anschlussgeräte im Sendezustand bzw. im Empfangszustand. Die Steuerung der jetzt abzuwickelnden Übertragungsvorgänge erfolgt unter dem Einfluss der Speicherzugriffseinrichtung DMAC gemäss Fig. 1. Als Folge der erwähnten Anforderungssignale (über die Leitung REQ) gibt die Speicherzugriffseinrichtung DMAC zunächst ein den zentralen Prozessor MPc der zentralen Steuereinrichtung hinsichtlich der Abgabe von Signalen an das zentrale Busleitungssystem unwirksam steuerndes Steuersignal über die Steuerleitung Cdp ab.

Nachdem der zentrale Prozessor MPc hinsichtlich der Abgabe von Signalen an das zentrale Busleitungssystem unwirksam gesteuert ist, gibt die Speicherzugriffseinrichtung DMAC der zentralen Steuereinrichtung aufeinanderfolgend Steuersignale bzw. Steuerimpulse über die Leitung DAC ab. Das Auftreten dieser Signale bewirkt bei dem im Sendezustand befindlichen Anschlussgerät, dass über die Leitung DACT Binärsignale "1" abgegeben werden, deren Auftreten dazu führt, dass das bistabile Kippglied FF1 gesetzt wird und dass somit der zugehörige interne Mikroprozessor MPp wieder angehalten wird. Ausserdem werden Binärsignale "1" über die Leitungen RDBF und FRG abgegeben. Das Auftreten eines Binärsignals "0" auf der Steuerleitung IOR von der Speicherzugriffseinrichtung DMAC gemäss Fig. 1 her bewirkt in Verbindung mit dem Binärsignal "1" auf der Leitung FRG, dass die Datenweiche DATW des betreffenden Anschlussgerätes so eingestellt wird, dass über sie Daten bzw. binäre Signale von der internen Datenbusleitung DBp zu der zentralen Datenbusleitung DBc übertragen werden können. Die betreffenden binären Signale werden dabei aus dem Pufferspeicher BM des betreffenden Anschlussgerätes ausgelesen. Zu diesem Zweck wird dem zugehörigen Datenspeicher RAMp eine entsprechende Adresse über die in den übertragungsfähigen Zustand gesteuerte Adressenfreigabeschaltung ADF zugeführt.

Im Falle des im Empfangszustand befindlichen jeweiligen Anschlussgerätes führt das Auftreten der Steuersignale bzw. Impulse auf der Leitung DAC dazu, dass von der zugehörigen Leitung DACR ein Binärsignal "1" abgegeben wird. Das Auftreten dieses Binärsignals "1" hat in dem betreffenden Anschlussgerät den Ablauf folgender Vorgänge zur Folge. Zunächst wird das zugehörige bistabile Kippglied FF1 gesetzt, wodurch ebenfalls der zugehörige interne Mikroprozessor MPp in den Haltezustand überführt wird. Dadurch führen dann die Leitungen WREX und FRG des betreffenden Anschlussgerätes jeweils ein Binärsignal "1". Das Auftreten dieser Binärsignale "1" hat wiederum zur Folge, dass auf das Auftreten eines Steuersignals auf der Steuerleitung MEMW von der Speicherzugriffseinrichtung DMAC der zentralen Steuereinrichtung her die zu dem betreffenden Zeitpunkt auf der zentralen Datenbusleitung DBc auftretenden binären Signale über die zugehörige und übertragungsfähig gesteuerte Datenweiche DATW zu dem zugehörigen Datenspeicher des betreffenden Anschlussgerätes hin übertragen werden. In diesem Datenspeicher RAMp ist der zugehörige Pufferspeicher BM durch die Adresse adressiert, die zu dem betreffenden Zeitpunkt von der zentralen Adressbusleitung ABc über die in den übertragungsfähigen Zustand gesteuerte zugehörige Adressenfreigabeschaltung ADF zugeführt ist. Bei dieser Adresse handelt es sich vorzugsweise um dieselbe Adresse, die zum Auslesen von binären Signalen aus dem Pufferspeicher des im Sendezustand befindlichen Anschlussgerätes herangezogen worden ist. Dies bedeutet, dass jeweils einander entsprechende Pufferspeicherbereiche der in die jeweilige Signalübertragung einbezogenen Anschlussgeräte adressiert werden.

Nach der Übertragung des letzten binären Signals von dem im Sendezustand befindlichen Anschlussgerät zu dem/den im Empfangszustand befindlichen Anschlussgerät(en) gibt die Speicherzugriffseinrichtung DMAC gemäss Fig. 1 ein gesondertes Steuersignal über die Leitung TC ab. Dieses Steuersignal tritt in Form eines Binärsignals "0" zusammen mit dem letzten Binärsignal "0" auf der zugehörigen Leitung DAC auf. Damit wird das bistabile Kippglied FF6 der zugehörigen Anzeigeschaltung TRE gesetzt. Nach Verschwinden des Binärsignals "0" auf der zugehörigen Leitung DAC wird dann auch das bistabile Kippglied FF5 der betreffenden Anzeigeschaltung TRE gesetzt. Damit wird ein Binärsignal "1" über die Leitung INTEI des betreffenden Anschlussgerätes abgegeben. Das Auftreten dieses Binärsignals "1" führt dazu, dass die zugehörige Sende- bzw. Empfangskippstufe FF3 bzw. FF4 in den Rücksetzzustand überführt wird und dass das bistabile Kippglied FF1 zurückgesetzt wird. Ausserdem bewirkt das betreffende Binärsignal "1", dass der Mikroprozessor MPp des betreffenden Anschlussgerätes wieder aus seinem Haltezustand herausgeführt wird, in welchem er sich im Verlaufe der betreffenden Signalübertragunng befunden hat. Der Mikroprozessor MPp kann nunmehr die entsprechenden Einstellsignale löschen, die im Kommandoregister CR seines zugehörigen Datenspeichers RAMp gespeichert sind. Dies bedeutet, dass das betreffende Anschlussgerät wieder aus seinem Sendezustand in seinen Ausgangszustand überführt wird.

Der Mikroprozessor MPp des gerade betrachteten Anschlussgerätes kann ferner an den Decoder Dec2 eine solche Adresse abgeben, dass dieser Decoder Dec2 über seine Ausgangsleitung DEL4 ein Binärsignal "1" abgibt. Dadurch werden dann die bistabilen Kippglieder FF5 und FF6 der zugehörigen Anzeigeeinrichtung TRE wieder in den Rücksetzzustand gesteuert.

Den vorstehend erläuterten Vorgängen in Zusammenhang mit dem Auftreten des Steuersignals auf der Leitung TC entsprechende Vorgänge laufen auch in jedem der im Empfangszustand befindlichen Anschlussgeräte ab. Im Unterschied zu den vorstehend erläuterten Verhältnissen werden diese Anschlussgeräte dann jedoch jeweils aus ihrem Empfangszustand in den Ausgangszustand überführt.

Nach Ablauf der vorstehend erläuterten Vorgänge befindet sich somit das Anschlussgerät, welches sich im Sendezustand befunden hatte, wieder in seinem Ausgangszustand. Das bzw. die Anschlussgerät(e), das bzw. die sich im Empfangszustand befunden hat bzw. haben, geben an die zentrale Steuereinrichtung ein Meldesignal (über die Leitung INT) ab, z.B. nachdem sie die empfangenen binären Signale verarbeitet bzw. weitergeleitet haben. Ein derartiges Meldesignal wird im vorliegenden Fall von der in Fig. 2B angedeuteten Transferende-Steuereinrichtung RRS über die Leitung INT abgegeben. Die Abgabe eines Binärsignals "0" über die Leitung INT erfolgt dabei dann, wenn das bistabile Kippglied FF7 der zugehörigen Transferende-Steuereinrichtung RRS gesetzt ist. Dieses bistabile Kippglied FF7 würde im Zuge des oben beschriebenen Übertragungsabschlussvorganges in den Anschlussgeräten gesetzt, die zuvor noch im Empfangszustand waren, und zwar dadurch, dass der zugehörige Decoder Dec2 über seine Ausgangsleitung DEL3 ein Binärsignal "1" abgibt. Dies ist dann der Fall, wenn dem Decoder Dec2 ein entsprechendes Adressensignal von dem zugehörigen Mikroprozessor MPp zugeführt wird. Waren mehrere Anschlussgeräte im Empfangszustand, so gibt jedes dieser Anschlussgeräte über seine Leitung INT ein Binärsignal "0" ab. Der zentrale Prozessor MPc stellt in diesem Falle fest, welches Anschlussgerät ein solches Signal abgegeben hat, indem er nacheinander die betreffenden Anschlussgeräte adressiert (Abgabe eines Binärsignals "1" über Leitung INZ) und jeweils ein Abfragesignal über die Leitung MEMR an das UND-Glied G25 abgibt und dadurch den Zustand des Kippgliedes FF7 über das UND-Glied G24 abfragt. Wenn das zugehörige bistabile Kippglied FF7 gesetzt ist, gibt das UND-Glied G24 über die Ausgangsleitung DØ ein Binärsignal "1" ab, auf dessen Aufnahme durch den zentralen Prozessor MPc dieser ein Signal über die Leitung MEMW zusammen mit der gleichen Adresse wie beim Abfragen dieses Zustandes zum Rücksetzen des Kippgliedes FF7 über das UND-Glied G26 abgibt.

Der zentrale Prozessor MPc erhält durch die Aufnahme der über die INT-Leitung abgegebenen Binärsignale "1" von der Beendigung der Signalübertragung Kenntnis; er kann daraufhin die Zustände, die sich auf die Signalübertragung bezogen haben, im zentralen Steuerbereich löschen. Ausserdem kann er wieder weitere Signalübertragungen betreffende Vorgänge abwickeln. Zuvor sind jedoch die beschriebenen Rücksetzvorgänge abzuschliessen, die das Rücksetzen des jeweiligen Kippgliedes FF7 betreffen.

Anschliessend sei noch bemerkt, dass zur Realisierung der in den Zeichnungen dargestellten Schaltungsanordnungen kommerziell erhältliche Bausteine verwendet werden können. So können der zentrale Prozessor MPc und der Mikroprozessor MPp durch Mikroprozessoren des Typs 8085 der Firma Intel gebildet sein. Die Speicherzugriffseinrichtung DMAC kann durch einen Baustein des Typs 8257 der Firma Intel gebildet sein. Die Programmspeicher ROMc, ROMp können durch Beusteine des Typs 8708 der Firma Intel gebildet sein. Der Arbeitsspeicher RAMc und der Datenspeicher RAMp können durch einen oder mehrere Bausteine des Typs 2119 der Firma Intel gebildet sein. Die Schnittstellenschaltung USART kann durch einen Baustein des Typs 8251A der genannten Firma gebildet sein. Die Weichenschaltungen MUX1, MUX2 können durch Bausteine des Typs SN74151 gebildet sein. Für die übrigen in Fig. 2A und 2B angedeuteten Schaltungselemente können herkömmliche integrierte Schaltungen verwendet werden.

## Patentansprüche

1. Verfahren zum Übertragen von binären Signalen zwischen jeweils zumindest mit Signalgebern verbundenen Anschlussgeräten (PD1 bis PDn) und jeweils zumindest mit Signalempfängern verbundenen Anschlussgeräten (PD1 bis PDn), wobei sämtliche Anschlussgeräte (PD1 bis PDn) über ein zentrales Busleitungssystem (ABc, DBc, CBc) miteinander und mit einer die Signalübertragung zwischen ihnen steuernden zentralen Steuereinrichtung (MPc, DMAC, ROMc, RAMc) verbunden sind, welche wenigstens einen zentralen Prozessor (MPc), insbesondere einen Mikroprozessor, mit zugehörigen Programm- und Arbeitsspeichern (ROMc, RAMc) umfasst, und wobei mit Hilfe des zentralen Prozessors (MPc) aufeinanderfolgend die einzelnen Anschlussgeräte (PD1 bis PDn) bezeichnende Adressen erzeugbar sind, dadurch gekennzeichnet, dass von jedem Anschlussgerät (z.B. PD1) vor der Übertragung von binären Signalen zu einem anderen Anschlussgerät (z.B. PDn) hin zunächst nur für die zentrale Steuereinrichtung (MPc, DMAC, ROMc, RAMc) ein Meldesignal bereitgestellt wird, welches die an die jeweilige gewünschte Signalübertragung zu beteiligenden Anschlussgeräte (PD1, PDn) bezeichnet, dass mit Hilfe des zentralen Prozessors (MPc) sodann das Vorhandensein von Signalen für eine Signalübertragung in den Anschlussgeräten (PD1) wiederholt überprüft wird, von denen Meldesignale bereitgestellt worden sind, dass auf die Ermittlung des Vorhandenseins einer eine Signalübertragung fordernden Anzahl von Signalen in einem Anschlussgerät (PD1) dem betreffenden Anschlussgerät (PD1) ein dieses aus einem Ausgangszustand in einen Sendezustand überführendes Einstellsignal zugeführt wird, während den für eine Signalaufnahme bestimmten Anschlussgeräten (PDn) ein dieses jeweils aus einem Ausgangszustand in einen Empfangszustand überführendes Einstellsignal zugeführt wird, dass nach dieser Einstellung der in eine Signalübertragung einzubeziehenden Anschlussgeräte (PD1, PDn) von dem in den Sendezustand eingestellten Anschlussgerät (PD1) ein den Umfang zu übertragender Signale angebendes Signalübertragungs-Anforderungssignal (REQ) an eine mit dem zentralen Busleitungssystem (AWc, DBc, CBc) verbundene und einem direkten Speicherzugriff dienende Speicherzugriffseinrichtung (DMAC) abgegeben wird, die daraufhin den zentralen Prozessor (MPc) der zentralen Steuereinrichtung hinsichtlich der Abgabe von Signalen an das zentrale Busleitungssystem (ABc, DBc, CBc) unwirksam steuert und von der sodann gesonderte Steuersignale (IOR, MEMW, DAC) in wechselnder Folge an die betreffenden Anschlussgeräte (PD1, PDn) zusammen mit den Zugriff zu den betreffenden binären Signalen bezeichnenden Adressen für die Abgabe von binären Signalen von dem im Sendezustand befindlichen Anschlussgerät (PD1) bzw. für die Aufnahme dieser binären Signale durch die im Empfangszustand befindlichen Anschlussgeräte (PDn) abgegeben werden, und dass nach der Übertragung des letzten Signals der für eine Signalübertragung zu berücksichtigenden Anzahl von Signalen von der Speicherzugriffseinrichtung (DMAC) an die betreffenden Anschlussgeräte (PD1, PDn) ein diese aus ihrem Sende- bzw. Empfangszustand jeweils in den Ausgangszustand zurücksetzendes Rücksetzsignal (TC) abgegeben wird.

2. Verfahren nach Anspruch 1, dadurch gekennzeichnet, dass von wenigstens einem der Anschlussgeräte (PD1, PDn), die in den Ausgangszustand zurückgesetzt worden sind, ein den zentralen Prozessor (MPc) wieder wirksam steuerndes Steuersignal (INT) abgegeben wird.

3. Verfahren nach Anspruch 1 oder 2, dadurch gekennzeichnet, dass bei mit Pufferspeichern (BM) und Steuereinrichtungen (MPp) versehenen Anschlussgeräten (PD1 bis PDn) durch die in dem im Sendezustand befindlichen Anschlussgerät (PD1) zugehörige Steuereinrichtung (MPp) zunächst die für eine Übertragung zum Pufferspeicher (BM) wenigstens eines im Empfangszustand befindlichen Anschlussgerätes (PDn) in Frage kommenden Binärsignale aus sie enthaltenden einzelnen gesonderten Speicherbereichen (Vorspeicherbereiche) des zugehörigen Pufferspeichers (BM) nacheinander in einen durch eine festgelegte Adresse bezeichneten besonderen Speicherbereich des betreffenden Pufferspeichers (BM) eingespeichert werden, dass mit Abgabe der betreffenden festgelegten Adresse durch die zentrale Steuereinrichtung ein Lesebefehlssignal bzw. ein Schreibbefehlssignal an die Pufferspeicher (BM) der in eine Signalübertragung einzuziehenden Anschlussgeräte (PD1, PDn) abgegeben wird, dass mit Auftreten des Lesebefehlssignals und des Schreibbefehlssignals die in dem genannten besonderen Speicherbereich des Pufferspeichers (BM) des im Sendezustand befindlichen Anschlussgerätes (PD1) gespeicherten Binärsignale ausgelesen und in einen entsprechend adressierten besonderen Speicherbereich des Pufferspeichers (BM) des jeweiligen im Empfangszustand befindlichen Anschlussgerätes (PDn) eingeschrieben werden und dass sie in dem betreffenden besonderen Speicherbereich des Pufferspeichers (BM) des jeweiligen im Empfangszustand befindlichen Anschlussgerätes (PDn) eingeschriebenen Binärsignale unter der Steuerung durch die dem jeweiligen im Empfangszustand befindlichen Anschlussgerät (PDn) zugehörige Steuereinrichtung (MPp) in andere Speicherbereiche des betreffenden Pufferspeichers (BM) umgespeichert werden, bevor sie von dem betreffenden Anschlussgerät (PDn) abgegeben werden.

4. Schaltungsanordnung zur Durchführung des Verfahrens nach Anspruch 1, wobei sämtliche Anschlussgeräte (PD1 bis PDn) an einem zentralen Busleitungssystem (ABc, DBc, CBc) angeschlossen sind, mit dem eine zentrale Steuereinrichtung verbunden ist, die wenigstens einen zentralen Prozessor (MPc), insbesondere einen Mikroprozessor, mit zugehörigen Programm- und Arbeitsspeichern (ROMc, RAMc) umfasst, dadurch gekennzeichnet, dass jedes Anschlussgerät (PD1, PDn) einen Pufferspeicher (BM) zur Zwischenspeicherung von binären Signalen aufweist, welche entweder von einem anderen Anschlussgerät oder von einem zugehörigen Signalsender zugeführt sind, dass jedes Anschlussgerät (PD1, PDn) eine interne Steuereinrichtung (MPp, ROMp) aufweist, welche auf das Auftreten eines die Einbeziehung des betreffenden Anschlussgerätes in eine Signalübertragung fordernden Anforderungssignals die Abgabe von den betreffenden Pufferspeicher (BM) für einen Schreibbetrieb bzw. für einen Lesebetrieb freigebenden Steuersignalen veranlasst, und dass der Pufferspeicher (BM) jedes Anschlussgerätes (PD1, PDn) mit einem Adresseneingang sowohl mit der internen Steuereinrichtung (MPp, ROMp) seines Anschlussgerätes als auch mit einer Adressbusleitung (ABc) des zentralen Busleitungssystems (ABc, DBc, CBc) verbunden ist.

5. Schaltungsanordnung nach Anspruch 4, dadurch gekennzeichnet, dass die dem jeweiligen Anschlussgerät (PD1, PDn) zugehörige interne Steuereinrichtung (MPp, ROMp) einen Mikroprozessor (MPp) enthält, der über ein internes Busleitungssystem (ABp, DBp, CBp) mit einem zugehörigen Programmspeicher (ROMp) verbunden ist, dass an dem internen Busleitungssystem (ABp, DBp, CBp) der dem betreffenden Anschlussgerät zugehörige Pufferspeicher (BM) angeschlossen ist und dass die Adressbusleitung (ABp) des internen Busleitungssystems (ABp, DBp, CBp) und die Adressbusleitung (ABc) des zentralen Busleitungssystems (ABc, DBc, DBc) über eine Freigabeschaltung (ADF) miteinander verbunden sind.

6. Schaltungsanordnung nach Anspruch 4 oder 5, dadurch gekennzeichnet, dass für jede Adressierung der Pufferspeicher (BM) der jeweils in eine Signalübertragung einzubeziehenden Anschlussgeräte (PD1, PDn) lediglich eine Adresse dient.

7. Schaltungsanordnung nach einem der Ansprüche 4 bis 6, dadurch gekennzeichnet, dass die dem jeweiligen Anschlussgerät zugehörigen Signalsender bzw. Signalempfänger über Schnittstellenschaltungen (USART) an dem internen Busleitungssystem (ABp, DBp, CBp) des betreffenden Anschlussgerätes (PD1, PDn) angeschlossen sind.

### Claims

1. Method for transmitting binary signals between peripheral devices (PD1 to PDn), respectively connected at least to signal emitters, and peripheral devices (PD1 to PDn) respectively connected at least to signal receivers, wherein all the peripheral devices (PD1 to PDn) are connected via a central bus line system (ABc, DBc, CBc) both to one another and to a central control device (MPc, DMAC, ROMc, RAMc) which controls the signal transmission between them and which includes at least one central processor (MPc), in particular a microprocessor, with associated programme stores and working stores (ROMc, RAMc), and wherein with the assistance of the central processor (MPc), addresses designating the individual peripheral devices (PD1 to PDn) can be consecutively generated, characterised in that prior to the transmission of binary signals to another peripheral device (e.g. PDn) each peripheral device (e.g. PD1) initially makes available only for the central control device (MPc, DMAC, ROMc, RAMc) a message signal which designates the peripheral devices (PD1, PDn) which are to participate in the respective required signal transmission, that with the assistance of the central processor (MPc) a repeated check is carried out to establish the existence of signals for a signal transmission in those peripheral devices (PD1) by which message signals have been made available, that upon the establishment of the existence in a peripheral device (PD1) of a number of signals requesting signal transmission, the peripheral device in question (PD1) is supplied with a setting signal which converts said peripheral device from an initial state into a transmitting state, whereas those peripheral devices (PDn) specified to receive signals are supplied with a setting signal by which they are converted from an initial state into a receiving state, that following this setting operation of the peripheral devices (PD1, PDn) which are to participate in the signal transmission, the peripheral device (PD1) which has been set in the transmitting state emits a signal transmission-request signal (REQ), which indicates the length of the signals to be transmitted, to a store access device (DMAC) connected to the central bus line system (AWc, DBc, CBc) and providing direct store access, and which subsequently deactuates the central processor (MPc) of the central control device as regards the emission of signals to the central bus line system (ABc, DBc, CBc), and which subsequently emits special control signals (IOR, MEMW, DAC) in alternating sequence to the relevant peripheral devices (PD1, PDn), together with addresses designating access to the relevant binary signals, for the emission of binary signals from the peripheral device (PD1) which occupies the transmitting state and for the reception of these binary signals by the peripheral devices (PDn) which occupy the receiving state, and that following the transmission of the last signal of the number of signals to be taken into account for the signal transmission from the store access device (DMAC) to the peripheral devices (PD1, PDn) in question, a reset signal (TC) which resets these peripheral devices from their transmitting state or receiving state into the initial state.

2. Method as claimed in claim 1, characterised in that at least one of the peripheral devices (PD1, PDn) which has been reset to its initial state emits a control signal (INT) which re-actuates the central processor (MPc).

3. Method as claimed in claim 1 or 2, characterised in that where the peripheral devices (PD1 to PDn) are provided with puffer stores (BM) and control devices (MPp), the control device (MPp) which is assigned to the peripheral device (PD1) which occupies the transmitting state firstly transfers the binary signals to be used for a transmission to the buffer store (BM) of at least one peripheral device (PDn) which occupies the receiving state, from individual special storage zones (preliminary storage zones) in which they are contained within the associated buffer store (BM) and consecutively inputs said binary signals into a special storage zone, designated by a fixed address, within the relevant buffer store (BM), that upon the emission of the relevant fixed address by the central control device, a read-command signal and a write-command signal are emitted to the buffer stores (BM) of the peripheral devices (PD1, PDn) which are to participate in the signal transmission, that upon the occurrence of this read-command signal and the write-command signal, the binary signals stored in the afore-mentioned special storage zone of the buffer store (BM) of the peripheral device (PD1) which occupies the transmitting state are read out and are input into an appropriately addressed special storage zone of the buffer store (BM) of the peripheral device (PDn) which occupies the receiving state, and that the binary signals which are recorded in the relevant special storage zone of the buffer store (BM) of the peripheral device (PDn) which occupies the receiving stare are re-stored, under the control of the control device (MPp) assigned to the peripheral device (PDn) which occupies the receiving state, into other storage zones of the buffer store (BM) in question before they are emitted by the particular peripheral device (PDn).

4. Circuit arrangement for the implementation of the method claimed in claim 1, wherein all the peripheral devices (PD1 to PDn) are connected to a central bus line system (ABc, DBc, CBc) which is itself connected to a central control device which includes at least one central processor (MPc) — in particular a microprocessor — with associated programme- and working-stores (ROMc, RAMc), characterised in that each peripheral device (PD1, PDn) has a buffer store (BM) which serves to intermediately store binary signals which have been supplied either by another peripheral device or by an associated signal transmitter, that each peripheral device (PD1, PDn) includes an internal control device (MPp, ROMp) which, in response to the occurrence of a request signal which requests that the particular peripheral device should participate in a signal transmission, brings about the emission of control signals which release the particular buffer store (BM) for write operation or for read operation, and that the buffer store (BM) of each peripheral device (PD1, PDn) is connected by one address input both to the internal control device (MPp, ROMp) of its peripheral device and to an address bus line (ABc) of the central bus line system (ABc, DBc, CBc).

5. Circuit arrangement as claimed in claim 4, characterised in that the internal control device (MPp, ROMp) assigned to the peripheral device in question (PD1, PDn) includes a microprocessor (MPp) which is connected via an internal bus line system (ABp, DBp, CBp) to an associated programme store (ROMp), that the internal bus line system (ABp, DBp, CBp) is connected to the buffer store (BM) assigned to the relevant peripheral device, and that the address bus line (ABp) of the internal bus line system (ABp, DBp, CBp) and the address bus line (ABc) of the central bus line system (ABc, DBc, CBc) are connected to one another via a release circuit (ADF).

6. Circuit arrangement as claimed in claim 4 or 5, characterised in that only one address serves to address the buffer stores (BM) of the peripheral device (PD1, PDn) which are to participate in a signal transmission.

7. Circuit arrangement as claimed in one of the claims 4 to 6, characterised in that the signal transmitters and signal receivers assigned to the peripheral device in question are connected via interface circuits (USART) to the internal bus line system (ABp, DBp, CBp) of the relevant peripheral device (PD1, PDn).

**Revendications**

1. Procédé pour la transmission de signaux binaires entre des dispositifs périphériques (PD1 à PDn) respectivement reliés au moins à des générateurs de signaux et des dispositifs périphériques (PD1 à PDn) respectivement reliés au moins à des récepteurs de signaux, cependant que tous les dispositifs périphériques (PD1 à PDn) sont reliés entre eux, par l'intermédiaire d'un système central de conducteurs omnibus (ABc, DBc, CBc), et à un dispositif de commande central (MPc, DMAC, ROMc, RAMc) qui commande la transmission de signaux entre eux et qui comprend au moins un processeur central (MPc), notamment un microprocesseur, avec des mémoires de programme et de travail associées (ROMc, RAMc), et cependant que des adresses désignant les dispositifs périphériques individuels (PD1 à PDn) peuvent être produites successivement à l'aide du processeur central (MPc), caractérisé par le fait qu'un signal de message, qui désigne les dispositifs périphériques (PD1, PDn) devant participer à la transmission de signaux respective souhaitée, est préparé par chaque dispositif périphérique (par exemple PD1) avant la transmission de signaux binaires vers un autre dispositif périphérique (par exemple PDn) tout d'abord uniquement pour le dispositif de commande central (MPc, DMAC, ROMc, RAMc), qu'à l'aide du processeur central (MPc) la présence de signaux pour une transmission de signaux est ensuite contrôlée de façon répétée dans les dispositifs périphériques (PD1) par lesquels des signaux de message ont été préparés, que lors de la détermination de la présence d'un nombre de signaux exigeant une transmission de signaux dans un dispositif périphérique (PD1) il est appliqué, au dispositif périphérique concerné, un signal de réglage qui fait passer de l'état initial dans un état d'émission, tandis qu'il est appliqué aux dispositifs périphériques (PDn) désignés pour une réception de signaux, un signal de réglage qui les fait respectivement passer d'un état initial dans un état de réception, qu'après ce réglage des dispositifs périphériques (PD1, PDn) devant être inclus dans une transmission de signaux, un signal de demande de transmission de signaux (REQ), indiquant le volume des signaux à transmettre, est délivré par le dispositif périphérique réglé dans l'état d'émission (PD1) à un dispositif d'accès aux mémoires (DMAC), relié au système central de conducteurs omnibus (AWc, DBc, CBc) et servant à un accès direct aux mémoires, qui d'après cela commande le processeur central (MPc) du dispositif de commande central de manière à le rendre inefficace en ce qui concerne la délivrance de signaux au système central de conducteurs omnibus (ABc, DBc, CBc) et à partir duquel ensuite des signaux de commande distincts (IOR, MEMW, DAC) sont appliqués en succession alternée aux dispositifs périphériques concernés (PD1, PDn), conjointement avec l'accès à des adresses désignant les signaux binaires concernés, pour la délivrance de signaux binaires par le dispositif périphérique (PD1) se trouvant dans l'état d'émission ou pour la réception de ces signaux binaires par le dispositif périphérique (PDn) se trouvant dans l'état de réception, et qu'après la transmission du dernier signal du nombre de signaux devant être pris en compte pour une transmission de signaux, il est délivré aux dispositifs périphériques concernés (PD1, PDn), par le dispositif d'accès aux mémoires (DMAC), un signal de mise dans l'état de repos (TC) qui remet ceux-ci de leur état d'émission ou de réception respectivement dans l'état initial.

2. Procédé suivant la revendication 1, caractérisé par le fait qu'un signal de commande (INT) commandant le processeur central (MPc) de façon à le rendre de nouveau efficace est appliqué par au moins un des dispositifs périphériques (PD1, PDn) qui ont été remis dans l'état initial.

3. Procédé suivant la revendication 1 ou 2, caractérisé par le fait que dans le cas de dispositifs périphériques (PD1 à PDn) munis de mémoires tampons (BM) et de dispositifs de commande (MPp), par l'intermédiaire du dispositif de commande (MPp) associé au dispositif périphérique (PD1) se trouvant dans l'état d'émission, les signax binaires dont il est question pour une transmission vers la mémoire tampon (BM) d'au moins un dispositif périphérique (PDn) se trouvant dans l'état de réception et provenant de zones de mémoire distinctes individuelles qui les contiennent (zones de pré-mémorisation) de la mémoire tampon associée (BM) sont tout d'abord mémorisés les uns à la suite des autres dans une zone de mémoire particulière, désignée par une adresse déterminée, de la mémoire tampon concernée (BM), qu'avec la délivrance de l'adresse déterminée concerne un signal d'instruction de lecture ou un signal d'instruction d'écriture est délivré, par le dispositif de commande central, aux mémoires tampons (BM) des dispositifs périphériques (PD1, PDn) qui doivent être inclus dans une transmission de signaux, qu'à l'apparition du signal d'instruction de lecture et du signal d'instruction d'écriture les signaux binaires mémorisés dans ladite zone de mémoire particulière de la mémoire tampon (BM) du dispositif périphérique se trouvant dans l'état d'émission (PD1) sont lus et sont inscrits dans une zone de mémoire particulière, adressée de façon correspondante, de la mémoire tampon (BM) du dispositif périphérique respectif (PDn) se trouvant dans l'état de réception, et que les signaux binaires inscrits dans la zone de mémoire particulière concernée de la mémoire tampon (BM) du dispositif périphérique respectif (PDn) se trouvant dans l'état de réception sont transférés, sous la commande du dispositif de commande (MPp) associé au dispositif périphérique respectif (PDn) se trouvant dans l'état de réception, dans d'autres zones de mémoire de la mémoire tampon concernée (BM), avant d'être délivrés par le dispositif périphérique concerné (PDn).

4. Agencement pour la mise en oeuvre du procédé suivant la revendication 1, dans lequel tous les dispositifs périphériques (PD1 à PDn) sont raccordés à un système central de conducteurs omnibus (ABc, DBc, CBc) auquel est relié un dispositif de commande central qui comprend au moins un processeur central (MPc) notamment un microprocesseur, avec des mémoires de programme et de travail associées (ROMc, RAMc), caractérisé par le fait que chaque dispositif périphérique (PD1, PDn) comporte une mémoire tampon (BM) pour la mémoirisation intermédiaire de signaux binaires qui sont appliqués soit par un autre dispositif périphérique soit par un émetteur de signaux associé, que chaque dispositif périphérique (PD1, PDn) comporte un dispositif de commande interne (MPp, ROMp) qui provoque, à l'apparition d'un signal de demande, demandant l'inclusion du dispositif périphérique concerné dans une transmission de signaux, la délivrance de signaux de commande qui libèrent les mémoires tampons concernées (BM) pour une opération d'écriture ou pour une opération de lecture, et que la mémoire tampon (BM) de chaque dispositif périphérique (PD1, PDn) est reliée, par une entrée d'adresse, aussi bien au dispositif de commande interne (MPp, ROMp) de son dispositif périphérique qu'à un conducteur omnibus d'adresse (ABc) du système central de conducteur omnibus (ABc, DBc, CBc).

5. Agencement suivant la revendication 4, caractérisé par le fait que le dispositif de commande interne (MPp, ROMp) associé au dispositif périphérique respectif (PD1, PDn) comporte un microprocesseur (MPp) qui est relié, par l'intermédiaire d'un système interne de conducteurs omnibus (ABp, DBp, CBp), à une mémoire de programme associée (ROMp), qu'au système interne de conducteurs omnibus (ABp, DBp, CBp) est reliée la mémoire tampon (BM) associée au dispositif périphérique concerné, et que le conducteur omnibus d'adresse (ABp) du système interne de conducteurs omnibus (ABp, DBp, CBp) et le conducteur omnibus d'adresse (ABc) du système central de conducteurs omnibus (ABc, DBc, CBc) sont reliés l'un avec l'autre, par l'intermédiaire d'un circuit de libération (ADF).

6. Agencement suivant la revendication 4 ou 5, caractérisé par le fait qu'une seule adresse sert pour l'adressage de la mémoire tampon (BM) des dispositifs d'adaptation (PD1, PDn) devant être respectivement inclus dans une transmission de signaux.

7. Agencement suivant l'une des revendications 4 à 6, caractérisé par le fait que les émetteurs de signaux ou récepteurs de signaux associés au dispositif périphérique respectif sont reliés, par l'intermédiaire de circuits d'interface (USART), au système interne de conducteurs omnibus (ABp, DBp, CBp) du dispositif périphérique concerné (PD1, PDn).

# FIG 1

# FIG 2C

| FIG 2A | FIG 2B |
|--------|--------|

# FIG 2A

FIG 2A

FIG 2B